(19) Europäisches Patentamt
European Patent Office
Office européen des brevets

(11) Publication number : **0 578 446 A2**

(12) # EUROPEAN PATENT APPLICATION

(21) Application number : **93305194.8**

(22) Date of filing : **02.07.93**

(51) Int. Cl.$^5$ : **C08G 59/38,** C08L 63/00, // (C08L63/00, 61:06), (C08L63/00, 65:00)

(30) Priority : **08.07.92 JP 204345/92**

(43) Date of publication of application : **12.01.94 Bulletin 94/02**

(84) Designated Contracting States : **DE FR GB**

(71) Applicant : **SHIN-ETSU CHEMICAL CO., LTD.**
**6-1, Ohtemachi 2-chome**
**Chiyoda-ku Tokyo (JP)**

(72) Inventor : **Shiobara, Toshio**
**10-13, Isobe 3-chome**
**Annaka-shi, Gunma-ken (JP)**
Inventor : **Aoki, Takayuki**
**13-37, Isobe 3-chome**
**Annaka-shi, Gunma-ken (JP)**
Inventor : **Futatsumori, Koji**
**571, Ootake**
**Annaka-shi, Gunma-ken (JP)**
Inventor : **Tomiyoshi, Kazutoshi**
**800-19, Yawata-machi**
**Takasaki-shi, Gunma-ken (JP)**

(74) Representative : **Stoner, Gerard Patrick et al**
**Mewburn Ellis 2 Cursitor Street**
**London EC4A 1BQ (GB)**

(54) **Epoxy resin compositions, preparations and uses thereof, semiconductor devices encapsulated therewith.**

(57) An epoxy resin composition includes (A) an epoxy resin containing (a) a naphthalene ring-containing epoxy resin and (b) a biphenyl type epoxy resin in a weight ratio of (a)/(b) of from 0.1 to 1, (B) a phenolic resin containing (c) a polyfunctional phenolic resin and (d) a dicyclopentadiene type phenolic resin in a weight ratio of (c)/(d) of from 0.5 to 3, and (C) an inorganic filler. The composition has smooth flow and improved moldability and cures into products which are substantially free of internal voids and have high Tg, high elongation, firm adhesion and low moisture absorption. The composition is molded for encapsulation over semiconductor devices which remain reliable against thermal shocks during surface mounting.

EP 0 578 446 A2

This invention relates to epoxy resin compositions, their preparation and use. It also relates to semiconductor devices encapsulated with cured epoxy resin compositions, and preparation and use of the compositions.

The mainstream of the modern semiconductor industry involves resin encapsulated diodes, transistors, IC, LSI, and super LSI. Among various resin compounds for encapsulating semiconductor devices, epoxy resin compositions comprising curable epoxy resins blended with curing agents and various additives are most widely used because they are generally better in moldability, adhesion, electrical properties, mechanical properties and moisture resistance than are other thermosetting resins. The present day trend for these semiconductor devices is toward an increasingly high degree of integration and correspondingly increased chip size. Packages, on the other hand, are desired to smaller and thinner in outer dimensions to meet the demands of compactness and light weight for electronic equipment. Further, as to the attachment of semiconductor parts on circuit boards, surface mounting of semiconductor parts is now often employed because it helps to increase part density on boards or the like.

A common approach to the surface mounting of semiconductor parts is to dip entire semiconductor devices in a solder bath or to pass them through a hot zone of molten solder. Thermal shocks associated with this process may cause encapsulating resin layers to crack, or may cause separation at the interface between the lead frames or chips and the encapsulating resin. Such cracking and separation become more serious if the semiconductor device encapsulating resin layers have absorbed moisture prior to thermal shocks encountered during surface mounting. Since encapsulating resin layers, however, inevitably absorb moisture in practical manufacturing steps, epoxy resin-encapsulated semiconductor devices after mounting sometimes suffer from a loss of reliability.

The general aim of the present disclosure is to provide novel epoxy resin compositions and methods of making and using them, in particular for encapsulation or similar covering applications.

One preferred aim is to provide epoxy resin compositions exhibiting excellent flow behaviour and moldability, and curing into products featuring minimal internal voids, a high glass transition temperature (Tg), high elongation, firm adhesion, and low moisture absorption.

Another preferred aim is a semiconductor device encapsulated with a cured epoxy resin composition which has high reliability arising from good resistance to thermal shocks, e.g. during surface mounting.

The inventors have found that by blending (a) a naphthalene ring containing epoxy resin and (b) a biphenyl type epoxy resin in a specific weight ratio as an epoxy resin component, blending it with a mixture of (c) a polyfunctional phenolic resin and (d) a dicyclopentadiene type phenolic resin in a specific weight ratio as a curing agent, and further blending with an inorganic filler, they could obtain an epoxy resin composition which had smooth flow and excellent moldability.

The compositions cured into products which were substantially free of defects such as internal voids, and had a high glass transition temperature (Tg), a lowering of modulus of elasticity in a temperature range above Tg, high elongation, low stresses, firm adhesion and low moisture absorption. These compositions are thus moldable over semiconductor devices. Semiconductor devices remain highly reliable after thermal shocks during surface mounting when they are encapsulated with cured products of such epoxy resin compositions.

Based on the above finding, the present invention provides an epoxy resin composition comprising (A) an epoxy resin containing (a) a naphthalene ring-containing epoxy resin and (b) a biphenyl type epoxy resin in a weight ratio of (a)/(b) of from 0.1 to 1, (B) a phenolic resin containing (c) a polyfunctional phenolic resin and (d) a dicyclopentadiene type phenolic resin in a weight ratio of (c)/(d) of from 0.5 to 3, and (C) an inorganic filler.

The naphthalene ring-containing epoxy resin (a) preferably accords with this formula (1):

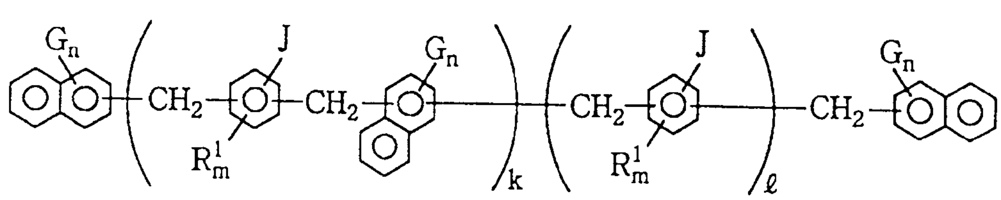

(1)

wherein $R^1$ is a hydrogen atom or alkyl group having 1 to 10 carbon atoms, G is

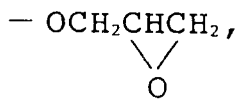

J is

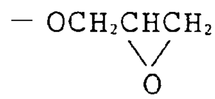

or a hydrogen atom, letter k is an integer of 0 to 5, ℓ is an integer of 0 to 3, m is an integer of 0 to 2, and n is equal to 1 or 2. G may be attached to either one of the rings of the naphthalene skeleton or both the rings.

The biphenyl type epoxy resin (b) preferably accords with this formula (2):

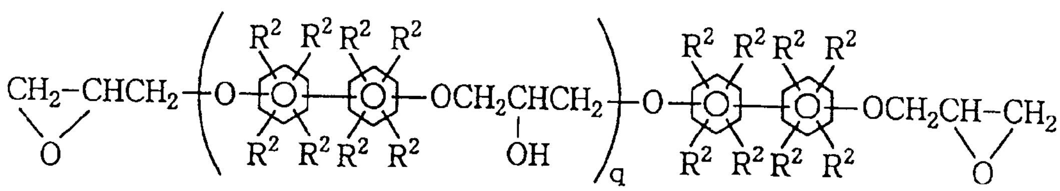

(2)

wherein $R^2$ is a hydrogen atom, halogen atom or alkyl group having 1 to 5 carbon atoms, and letter q is an integer of 0 to 5.

The polyfunctional phenolic resin (c) preferably accords with this formula (3):

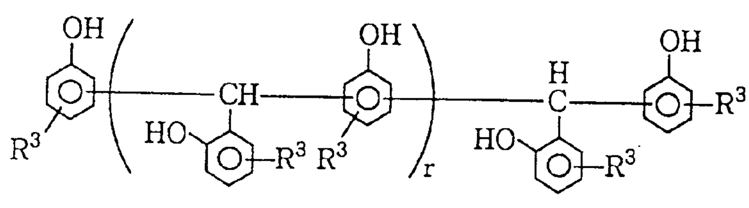

(3)

wherein $R^3$ is a hydrogen atom or alkyl group having 1 to 5 carbon atoms, and letter r is an integer of 0 to 5.

The dicyclopentadiene type phenolic resin (d) preferably accords with this formula (4):

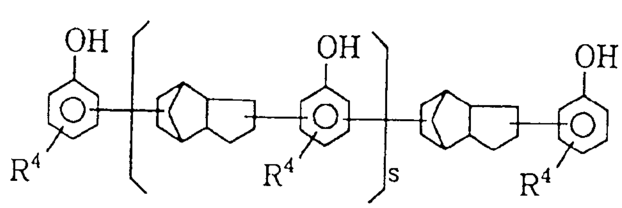

(4)

wherein $R^4$ is a hydrogen atom or alkyl group having 1 to 5 carbon atoms, and letter s is an integer of 0 to 5.

Also contemplated herein is a semiconductor device encapsulated with a cured product of the epoxy resin composition, a method of preparing such a composition by mixing the aforesaid components, and use of such a composition for covering or coating e.g. encapsulation.

## DETAILED DESCRIPTION

As mentioned above, the epoxy resin composition of the present invention is comprised of (A) an epoxy resin containing in admixture (a) a naphthalene ring-containing epoxy resin and (b) a biphenyl type epoxy resin,

(B) a phenolic resin containing in admixture (c) a polyfunctional phenolic resin and (d) a dicyclopentadiene type phenolic resin, and (C) an inorganic filler.

Epoxy resin component (A) includes (a) an epoxy resin having a naphthalene ring, typically of general formula (1).

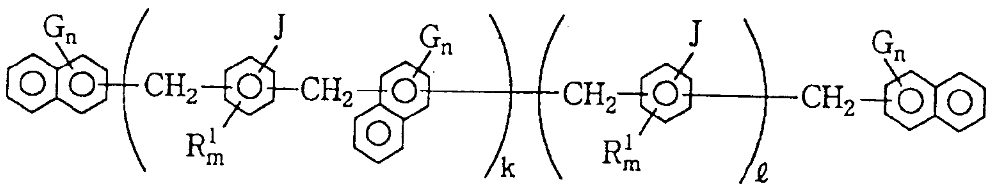

(1)

In formula (1), $R^1$ is a hydrogen atom or alkyl group having 1 to 10 carbon atoms, such as methyl, ethyl and propyl groups, G is

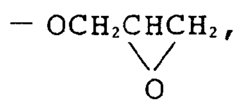

J is

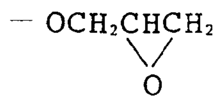

or a hydrogen atom, letter k is an integer of 0 to 5, $\ell$ is an integer of 0 to 3, m is an integer of 0 to 2, and n is equal to 1 or 2. When n is equal to 2, G may be attached to either one ring or both rings of the naphthalene skeleton.

Illustrative, non-limiting examples of the epoxy resin having one or more naphthalene rings carrying glycidoxy groups are given below.

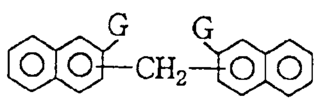

,

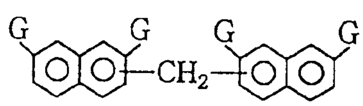

,

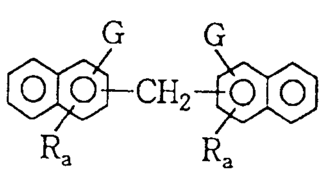

,

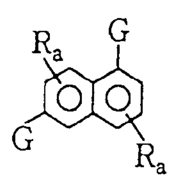

,

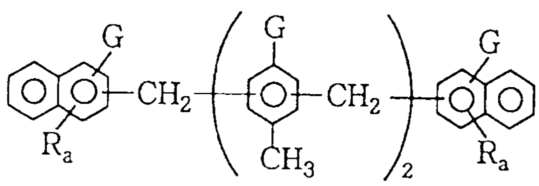 ,

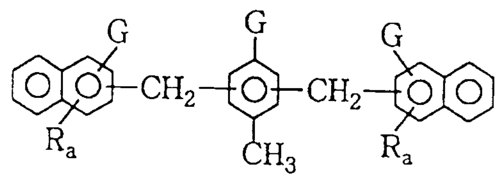 ,

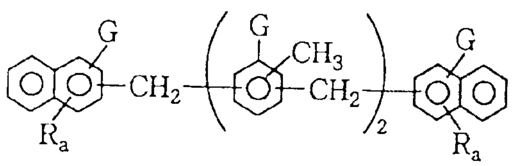 ,

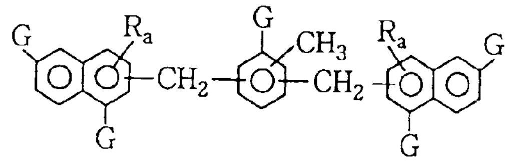 ,

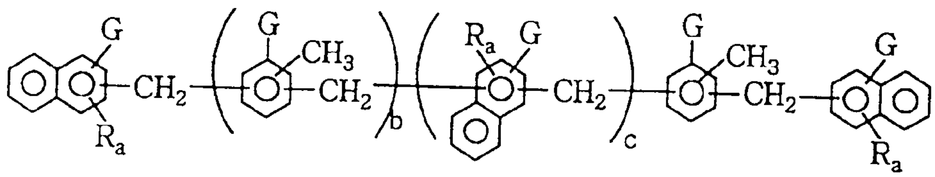 ,

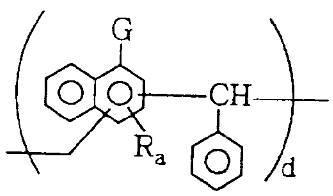 ,

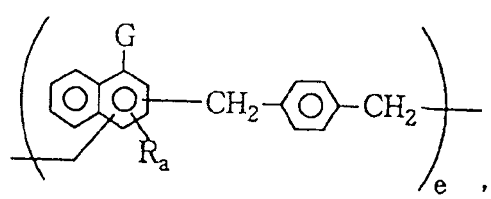 ,

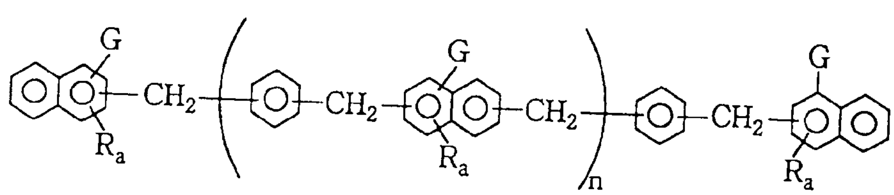

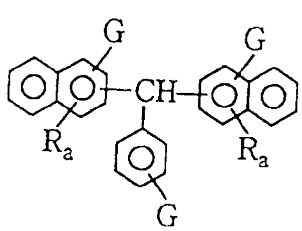

In the formulae, R is hydrogen or a monovalent hydrocarbon group having 1 to 5 carbon atoms; G is a glycidoxy group as defined above; letter a is equal to 1 or 2; b, c, d, and e each are an integer of at least 2.

Epoxy resin component (A) also includes (b) an epoxy resin containing a biphenyl group, typically of general formula (2).

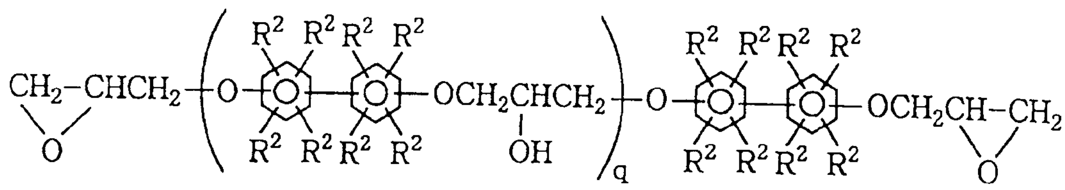

(2)

In formula (2), $R^2$ is a hydrogen atom, a halogen atom or an alkyl group having 1 to 5 carbon atoms, for example, hydrogen, chloro, bromo, methyl and ethyl groups, and letter q is an integer of from 0 to 5. Biphenyl type epoxy resin (b), when combined with naphthalene ring-containing epoxy resin (a), is useful for improving the moisture absorption and adhesion of cured products.

Illustrative, non-limiting examples of biphenyl type epoxy resins, having at least one biphenyl moiety between glycidoxy groups, are given below.

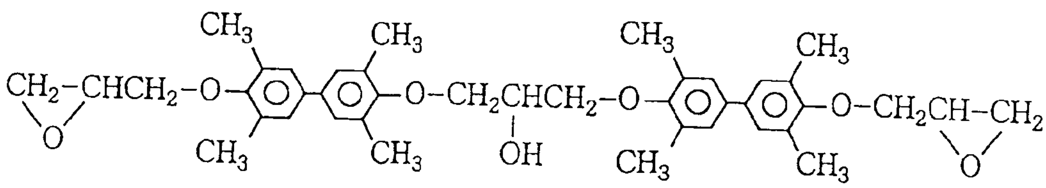

(5)

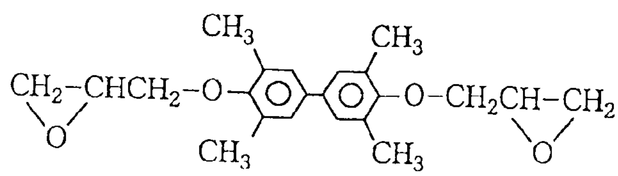

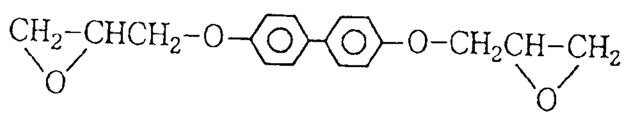

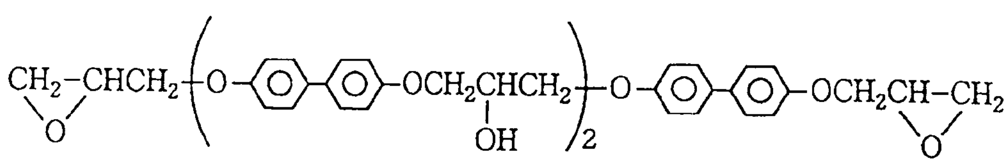

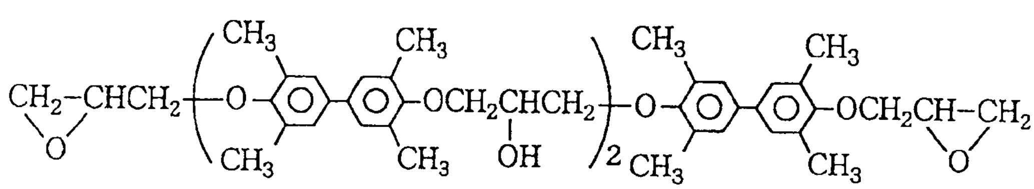

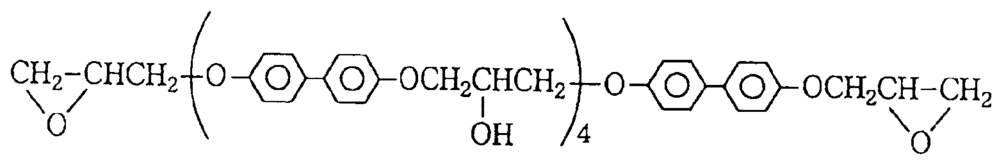

Preferred among these biphenyl type epoxy resins is the compound of formula (5). We find it helps provide an epoxy resin composition with a low viscosity and a total chlorine content of up to 500 ppm.

The present invention uses both (a) the naphthalene ring-containing epoxy resin, and (b) the biphenyl-containing epoxy resin together in an epoxy resin base in a weight ratio (a)/(b) of from 1/10 to 10/10, preferably from 2/10 to 8/10. A ratio (a)/(b) of less than 0.1 leads to low viscosity, many internal voids, and low Tg. With a ratio (a)/(b) of more than 1, adhesion lowers and melt viscosity becomes too high to mold over multipin packages and thin packages for encapsulation, resulting in a loss of reliability.

Essential epoxy resins used in the epoxy resin composition of the present invention are a naphthalene ring-containing epoxy resin and a biphenyl type epoxy resin e.g. as defined above, but other e.g. conventional epoxy resin may be additionally used. Typical of the additional epoxy resin are epoxy resins having at least two epoxy groups in a molecule, for example, bisphenol-A type epoxy resins, phenol novolak type epoxy resins, triphenol alkane type epoxy resins and polymers thereof, dicyclopentadiene type epoxy resins, phenol aralkyl type epoxy resins, glycidyl ester type epoxy resins, cycloaliphatic epoxy resins, heterocyclic epoxy resins, and halogenated epoxy resins.

Preferably, a mixture of the epoxy resins of types (a) and (b) is used in amount of at least 50% by weight, especially from 70 to 85% by weight of the entire epoxy resin.

Component (B) is a phenolic resin which is a curing agent for epoxy resin (A). The phenolic resin (B) includes (c) a polyfunctional phenolic resin and (d) a dicyclopentadiene type phenolic resin in admixture and helps the epoxy resin composition to have a high Tg, low mixture absorption and firm adhesion which we believe to be unprecedented.

Polyfunctional phenolic resin (c) is typically of the following general formula (3).

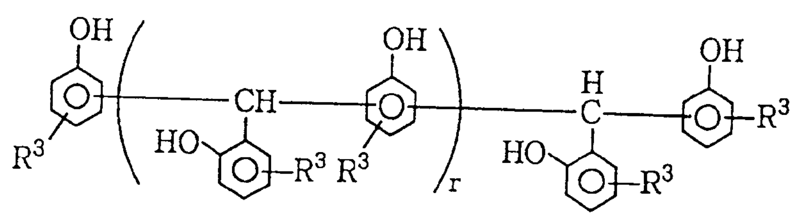

(3)

In formula (3), $R^3$ is a hydrogen atom or an alkyl group having 1 to 5 carbon atoms such as methyl and ethyl groups, and letter r is an integer of from 0 to 5.

Illustrative, non-limiting examples of suitable phenolic resins are given below.

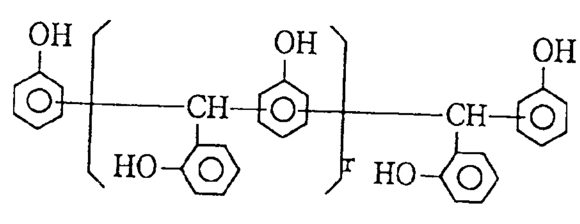

,

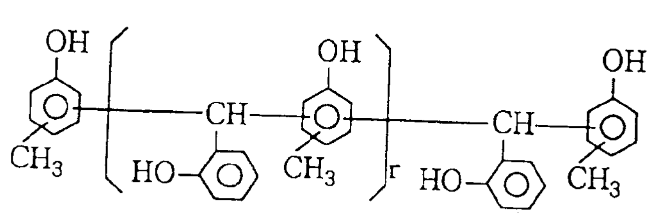

Dicyclopentadiene type phenolic resin (d) is typically of the following general formula (4).

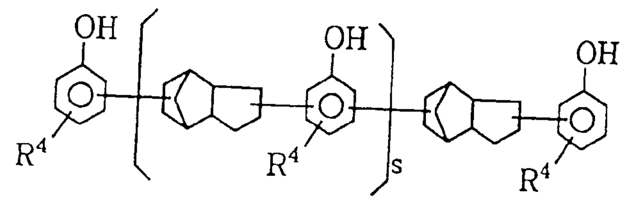 (4)

In formula (4), $R^4$ is a hydrogen atom or an alkyl group having 1 to 5 carbon atoms such as methyl and ethyl groups, and letter s is an integer of from 0 to 5.

Illustrative, non-limiting examples of phenolic resins having one or more dicyclopentadiene groups in the chain between phenolic end groups are given below.

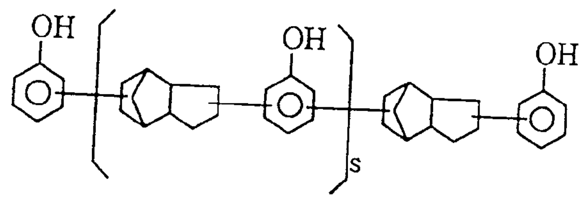

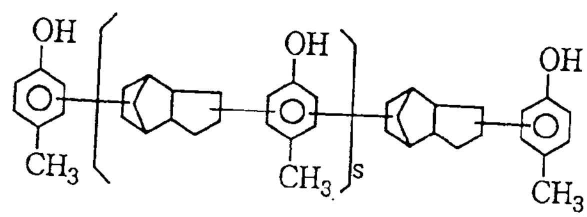

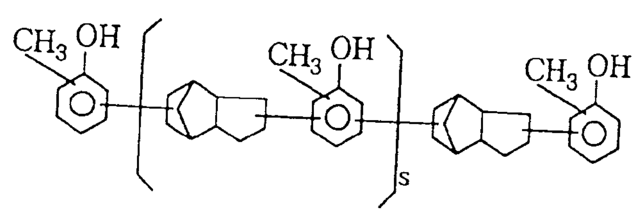

In the practice of the invention, both the polyfunctional phenolic resin (c) and the dicyclopentadiene type phenolic resin (d) are used as phenolic resin components in a weight ratio of (c)/(d) of from 1/2 to 3/1, preferably from 1/1 to 2/1. A weight ratio (c)/(d) of less than 0.5 leads to a lowering of Tg whereas a weight ratio (c)/(d) of more than 3 leads to increased water absorption, high viscosity and low adhesion.

In addition to (c) polyfunctional phenolic resin and (d) dicyclopentadiene type phenolic resin both defined above, the composition of the invention may further contain any other e.g. well-known phenolic resins. Examples of additional phenolic resins which may be used herein include novolak type phenolic resins, resol type phenolic resins, triphenol alkane type resins, naphthalene ring-containing phenolic resins, and phenol aralkyl resins. Also acceptable is the use of other curing agents such as amine curing agents and acid anhydride curing agents. Preferred are naphthalene ring-containing phenolic resins and phenol aralkyl resins.

In this regard, a mixture of the phenolic resins of types (c) and (d) is preferably blended in amounts of at least 10% by weight, especially from 40 to 100% by weight of the entire phenolic resin because advantages of high Tg, firm adhesion and low moisture absorption are enhanced.

Desirably, the composition contains epoxy and phenolic resins in such quantities that the ratio of the quantity of epoxy group (x mol) in the epoxy resins to the quantity of phenolic hydroxyl group (y mol) in the phenolic resins, x/y, may range from 1/2 to 2/1, especially from 8/10 to 15/10. Outside the range, some of the epoxy or

phenolic resin would remain unreacted, and may lead to low strength and low moisture resistance.

Component (C) is an inorganic filler which may be selected from those commonly used for epoxy resins. Examples include silicas such as fused silica and crystalline silica, alumina, silicon nitride, aluminum nitride, boron nitride, titanium oxide, and glass fibers. Among these, fused silica is preferred, and fused silica having a mean grain size of about 3 to 15 μm is especially preferred from a molding aspect. The fused silica is desirably of spherical shape for high loadings and less stresses relative to the chip surface. The inorganic filler is preferably surface treated with silane coupling agents prior to blending in order to enhance the interfacial strength between the resin and the filler.

These inorganic fillers may be used alone or in admixture of two or more. The filler is preferably used in an amount of about 100 to about 1,000 parts, especially about 200 to about 700 parts by weight per 100 parts by weight of the total of epoxy and phenolic resins (A) and (B) although the filler content is not particularly limited.

A curing catalyst may be blended in the epoxy resin composition of the invention. The curing catalysts usable herein include imidazoles, tertiary amines, and phosphorus compounds. The amount of the curing catalyst added is not particularly limited although it is preferably added in an amount of 0.1 to 2 parts, more preferably 0.4 to 1.5 parts by weight per 100 parts by weight of the total of epoxy and phenolic resins (A) and (B).

The composition of the invention may further contain various additives if desired. Exemplary conventional additives include stress lowering agents such as thermoplastic resins, thermoplastic elastomers, organic synthetic rubbers, and silicones; mold release agents such as waxes (e.g., carnauba wax) and fatty acids (e.g., stearic acid) and metal salts thereof; pigments such as carbon black, cobalt blue, and red iron oxide; flame retardants such as antimony oxide and halides; silane coupling agents such as glycidoxypropyltrimethoxysilane; surface treating agents such as alkyl titanates; antioxidants; halogen trapping agents; other additives, and mixtures thereof.

The epoxy resin compositions may be prepared by mixing and agitating predetermined amounts of the necessary components uniformly, preferably milling the mixture in milling means preheated at 70 to 95°C, for example, a kneader, roll mill and extruder, followed by cooling and comminution. The order of mixing the components is not critical.

The compositions of the invention are typically applicable in encapsulating various types of semiconductor device including SOP, SOJ, TSOP, and TQFP types. The compositions can be molded by conventional methods including transfer molding, injection molding, and casting. Most often, the epoxy resin compositions are molded at a temperature of about 150 to 180 °C for about 30 to about 180 seconds and post cured at a temperature of about 150 to about 180 °C for about 2 to about 16 hours.

We find that such compositions can be prepared, exhibit good flow behaviour and moldability, and cure into products featuring minimal internal voids, high Tg, high elongation low stresses, firm adhesion, and low moisture absorption. Encapsulating semiconductor devices with cured products of the epoxy resin compositions protects the devices with high reliability against thermal shocks during surface mounting.

## EXAMPLE

Examples of the present invention are given below together with Comparative Examples, by way of illustration.

All parts are by weight.

In the Examples and Comparative Examples, the following tests (A) to (F) were carried out.

(A) Spiral flow

Using a mold according to the EMMI standard, measurement was made at 175 °C and 70 $kg/cm^2$.

(B) Flexural strength and Flexural modulus

Test bars of 10 × 4 × 100 mm which were molded at 175 °C and 70 $kg/cm^2$ for 2 minutes and post cured at 180°C for 4 hours were tested at 215 °C according to JIS K6911.

(C) Coefficient of linear expansion ($\alpha_1$) and Glass transition temperature (Tg)

Test pieces of 4 mm in diameter and 15 mm long were examined in accordance with the TMA method by heating the test pieces at a rate of 5 °C/min.

(D) Crack resistance upon soldering after moisture absorption

Quad flat packages (80-pin QFP) were encapsulated with the epoxy resin composition by molding at 175 °C and 70 $kg/cm^2$ for 2 minutes and post curing at 180 °C for 4 hours. The packages were allowed to stand in a hot humid atmosphere at 85°C and RH 85% for 168 hours and then subject to IR reflow for 30 seconds. Reported is the number of cracked packages/the total number of packages tested.

(E) Water absorption

Disks of 50 mm in diameter and 2 mm thick were molded at 175 and 70 $kg/cm^2$ for 2 minutes and post

cured at 180°C for 4 hours. The disks were allowed to stand in an atmosphere at 121 °C/100% RH for 24 hours before the water absorption (percent) was measured.

(F) Adhesion

Cylinders of 15 mm in diameter and 5 mm high were molded on 42-alloy plates at 175°C and 70 kg/cm[2] for 2 minutes and post cure at 180°C for 4 hours. Using a push-pull gage, the force required to separate the molded cylinder from the 42-alloy plate was measured.

Examples 1-5 and Comparative Examples 1-5

Ten epoxy resin compositions were prepared by uniformly melt mixing the following components in a hot two-roll mill, cooling and comminuting the mixtures. The components used were: epoxy resins and phenolic resins, all shown below and used in the amounts shown in Table 1, 0.6 parts of a curing catalyst shown below, 0.7 parts of triphenylphosphine, 580 parts of spherical fused silica having a mean grain size of 10 μm, 120 parts of spherical fused silica having a mean grain size of 1 μm, 8 parts of antimony trioxide, 1.5 parts of carbon black, 1 part of carnauba wax, and 3 parts of γ-glycidoxypropyltrimethoxysilane. These epoxy resin compositions were examined by tests (A) to (F), with the results shown in Table 1.

| Epoxy resin | Epoxy equiv. | Softening point |
|---|---|---|
| (1) 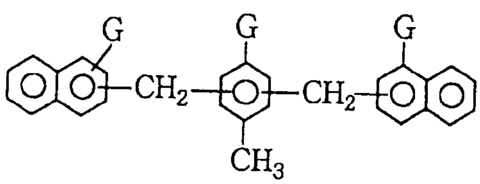 | 215 | 70℃ |
| (2) 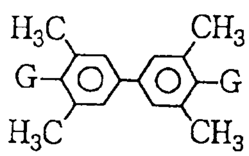 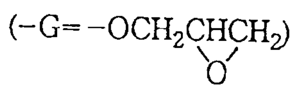 | 190 | 110℃ |
| (3) Brominated epoxy resin (BREN－S, Nihon Kayaku K.K.) | 280 | 80℃ |

| Phenolic resin | OH equiv. | Softening point |
|---|---|---|
| (1) 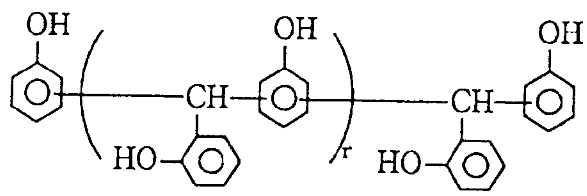 | 97 | 111℃ |
| (2) 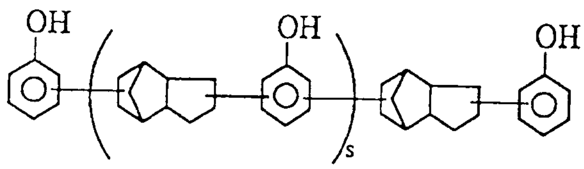 | 183 | 101℃ |
| (3) 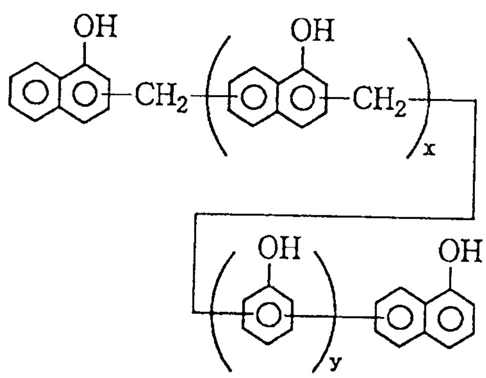 | 137 | 98℃ |
| (4) Phenol novolak resin (TD2131, Dai－Nihon Ink K.K.) | 110 | 85℃ |

Curing catalyst

It was prepared by mixing 1,8-diazobicyclo(5.4.0) undecene-7 and phenol novolak resin TD2131 (manufactured by Dai-Nihon Ink K.K) in a weight ratio of 20/80, heat melting them at 130 °C for 30 minutes, and atomizing to a size of less than 50 µm.

Table 1

| Composition, pbw | Example | | | | | Comparative Example | | | | |
|---|---|---|---|---|---|---|---|---|---|---|
| | 1 | 2 | 3 | 4 | 5 | 1 | 2 | 3 | 4 | 5 |
| Epoxy resin (1) | 27.9 | 29.0 | 11.6 | 16.6 | 27.6 | 61.7 | | 43.5 | 30 | 22 |
| Epoxy resin (2) | 27.9 | 29.0 | 46.4 | 38.7 | 27.6 | | 54.4 | 18.6 | 30 | 22 |
| Epoxy resin (3) | 8 | 8 | 8 | 8 | 8 | 8 | 8 | 8 | 8 | 8 |
| Phenolic resin (1) | 18.1 | 22.7 | 25.5 | 18.4 | 12.3 | 15.2 | 18.8 | 29.9 | 32 | |
| Phenolic resin (2) | 18.1 | 11.4 | 8.5 | 18.4 | 12.3 | | 18.8 | | | 46 |
| Phenolic resin (3) | | | | | 12.3 | | | | | |
| Phenolic resin (4) | | | | | | 15.2 | | | | |
| Properties | | | | | | | | | | |
| Spiral flow, (cm) | 102 | 91 | 119 | 109 | 114 | 69 | 124 | 51 | 71 | 76 |
| Flexural strength, $kg/mm^2$ | 1.9 | 2.2 | 2.0 | 1.6 | 1.8 | 2.3 | 1.0 | 2.9 | 2.3 | 0.9 |
| Flexural modulus, $kg/mm^2$ | 85 | 92 | 75 | 81 | 87 | 110 | 42 | 190 | 150 | 75 |
| Tg, ℃ | 160 | 164 | 157 | 152 | 156 | 168 | 128 | 172 | 168 | 115 |
| $\alpha_1$, $10^{-5}$/℃ | 0.8 | 0.8 | 0.8 | 0.8 | 0.8 | 0.8 | 0.9 | 0.8 | 0.8 | 0.9 |
| Crack resistance | 0/20 | 0/20 | 0/20 | 0/20 | 0/20 | 18/20 | 2/20 | 20/20 | 20/20 | 3/20 |
| Water absorption, % | 0.38 | 0.42 | 0.41 | 0.40 | 0.39 | 0.40 | 0.42 | 0.48 | 0.47 | 0.4 |
| Adhesion, kgf | 36 | 32 | 44 | 41 | 34 | 12 | 42 | 6 | 8 | 28 |

As seen from Table 1, the epoxy resin composition of Examples 1 to 5 flow smoothly, are readily moldable and cure into products having high Tg, good elongation, firm adhesion and low moisture absorption.

Some preferred embodiments have been described. Many modifications and variations may be made thereto in the light of the general teachings above.

## Claims

**1.** An epoxy resin composition comprising

(A) an epoxy resin comprising in admixture (a) a naphthalene ring-containing epoxy resin and (b) a biphenyl type epoxy resin in a weight ratio of (a)/(b) of from 0.1 to 1,

(B) a phenolic resin comprising in admixture (c) a polyfunctional phenolic resin and (d) a dicyclopentadiene type phenolic resin in a weight ratio of (c)/(d) of from 0.5 to 3, and

(C) an inorganic filler,

the naphthalene ring-containing epoxy resin (a) having the general formula (1):

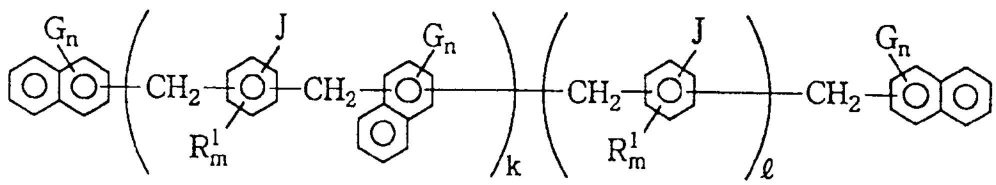

(1)

wherein $R^1$ is a hydrogen atom or alkyl group having 1 to 10 carbon atoms, G is

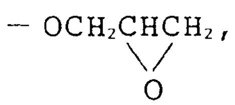

J is

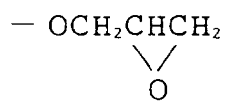

or a hydrogen atom, letter k is an integer of 0 to 5, $\ell$ is an integer of 0 to 3, m is an integer of 0 to 2, and n is equal to 1 or 2 with the proviso that G may be attached to either one or both the rings of the naphthalene skeleton,

the biphenyl type epoxy resin (b) having the general formula (2):

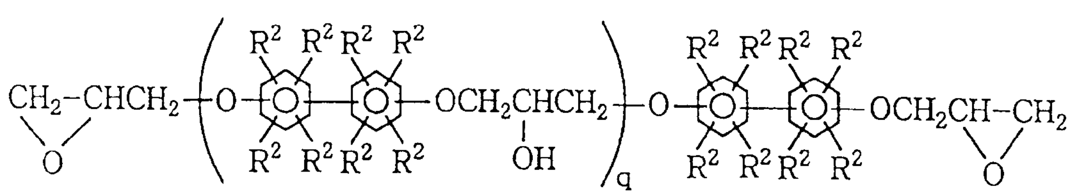

(2)

wherein $R^2$ is a hydrogen atom, halogen atom or alkyl group having 1 to 5 carbon atoms, and letter q is an integer of 0 to 5,

the polyfunctional phenolic resin (c) having the general formula (3):

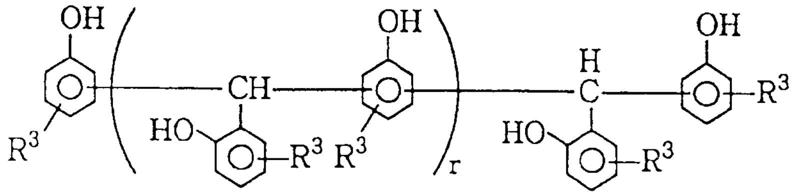

(3)

wherein $R^3$ is a hydrogen atom or alkyl group having 1 to 5 carbon atoms, and letter r is an integer of 0 to 5,

the dicyclopentadiene type phenolic resin (d) having the general formula (4):

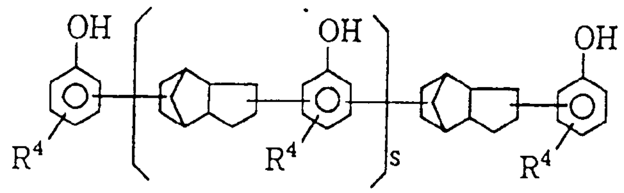

(4)

wherein $R^4$ is a hydrogen atom or alkyl group having 1 to 5 carbon atoms, and letter s is an integer of 0 to 5.

**2.** A semiconductor device encapsulated with a cured product of an epoxy resin composition as set forth in claim 1.

**3.** A method comprising the preparation of a composition according to claim 1.

**4.** Use of a composition according to claim 1 to form a covering or coating.

**5.** Use of an epoxy composition obtainable from
(A) an epoxy resin component comprising
(a) a naphthalene ring-containing epoxy resin, having at least two glycidoxy groups on at least one naphthalene group; and
(b) a biphenyl-type epoxy resin having at least two glycidoxy groups on at least one biphenyl group, at a weight ratio (a)/(b) of from 0.1 to 1;
(B) a phenolic resin component comprising
(c) a polyfunctional phenolic resin having one or more phenolic side groups of the chain between phenolic end groups, and
(d) a dicyclopentadiene-type phenolic resin having one or more dicyclopentadiene groups in the chain between phenolic end groups,
at a weight ratio (c)/(d) of from 0.5 to 3;
(C) a filler,
as an encapsulant for a semiconductive device.